# EUROPÄISCHE PATENTSCHRIFT

(11) **EP 1 099 899 B1**
(45) Veröffentlichungstag und Bekanntmachung des Hinweises auf die Patenterteilung: **08.08.2007**
(21) Anmeldenummer: 00119711.0
(22) Anmeldetag: 09.09.2000
(51) Int. Cl.: F16L 55/033, F16L 58/10, F16L 59/02, F16L 11/04

(54) **Schlauch**
Hose
Tuyau flexible

(30) Priorität: 11.11.1999 DE 29919710 U
(43) Veröffentlichungstag der Anmeldung: 16.05.2001
(73) Patentinhaber: Poppe GmbH & Co. KG, D-35392 Giessen (DE)
(72) Erfinder: Napetschnig, Werner, 35625 Hüttenberg (DE)
(74) Vertreter: Böck, Bernhard

(56) Entgegenhaltungen:
- DE-B- 1 805 823
- US-A- 3 161 210
- US-A- 4 410 012

## Beschreibung

Die Erfindung betrifft einen Schlauch aus Gummi oder Kunststoff, wobei der Schlauch auf der inneren Wandung Rippen oder Noppen aufweist. Ein solcher Schlauch ist aus US-A-3 161 210 bekannt.

Ein derartiger Schlauch kann über eine Rohr- oder Schlauchleitung gezogen werden, um diese z.B. in Position zu halten, gegen Beschädigungen zu schützen oder gegen Schwingungen zu isolieren. Außerdem kann ein solcher Schlauch als Scheuerschutz auf Rohr- oder Schlauchleitungen, z.B. im Kfz-Motorraum oder in Verbindung mit einer passend geformten Metall- oder Kunststoffschelle als Leitungshalterung unter dem Fahrzeugboden benutzt werden. Die bekannten ungeschlitzten Schläuche sind aus einem weichen Gummimaterial hergestellt. Bei der Montage werden die Schläuche mit Vorspannung auf die Leitung aufgezogen. Oftmals werden sie auch vor der Montage zum leichten Aufziehen umgestülpt, so dass die Rippen oder Noppen nach außen weisen. An der gewünschten Position wird der Ring erneut umgestülpt und sitzt dann mit den Rippen oder Noppen fest auf der Leitung. Bei gekrümmten Leitungen muss der Schlauch vor dem Biegen der Leitung aufgezogen werden, da es problematisch ist, den Schlauch über eine Krümmung zu ziehen. Das Aufziehen eines Schlauches auf eine Leitung bedeutet also einen nicht unerheblichen Aufwand. Ein weiterer Nachteil ist, dass der Schlauch mitunter so fest auf der Leitung sitzt, dass beim Verschieben Gummiabrieb entsteht, der als schwarzer Streifen auf der Leitung verbleibt, was u.U. vor allem in sichtbaren Bereichen nicht akzeptabel ist.

Der Erfindung liegt daher die Aufgabe zugrunde, einen Schlauch vorzuschlagen, welcher einfach auf eine Leitung aufgezogen wird und auch auf dieser Leitung noch nachträglich verschoben werden kann.

Diese Aufgabe wird erfindungsgemäß dadurch gelöst, dass der Schlauch aus einem Verbundwerkstoff aus zumindest zwei Elastomeren besteht, dass der Schlauch in Längsrichtung einen Schlitz aufweist, wobei der Schlauch in den Bereichen beiderseits des Schlitzes aus einem härteren Elastomer als das übrige Elastomer des Schlauches besteht und dass in diesen Bereichen auf jeweils gegenüberliegenden Seiten des Schlitzes zumindest eine hinterschnittene Ausnehmung und ein dazu komplementärer Widerhaken ausgebildet ist, wobei den Widerhaken innen hohl ist.

Dieser erfindungsgemäße Schlauch kann entlang des Schlitzes aufgeknöpft werden. Der aufgeknöpfte Schlauch kann dann exakt an der Stelle um die Leitung gelegt werden, an welcher dieser seine endgültige Position haben soll. Die Widerhaken werden zum Verschließen einfach in die hinterschnittene Ausnehmung eingedrückt. Der Schlauch sitzt dann fest auf der Leitung, kann jedoch, falls dies erforderlich ist, wieder von der Leitung genommen werden. Dazu muss lediglich der Verschluss geöffnet werden, d.h., die hinterschnittenen Ausnehmungen müssen aufgebogen werden, um die Widerhaken zu entnehmen. Gemäß der Erfindung sind die Widerhaken innen hohl Dadurch wird ein Zusammendrücken der Widerhaken erleichtert, was für das Wiederaufknöpfen des Schlauches von Vorteil sein kann.

Ferner können die Widerhaken und die dazugehörigen Ausnehmungen über die gesamte Länge des Schlauches ausgebildet sein, was besonders vorteilhaft für die Herstellung des Schlauches ist.

Erfindungsgemäß kann der Durchmesser des Schlauches die Länge des Schlauches übersteigen, d.h., der Schlauch kann als aufknöpfbarer Zackenring ausgebildet sein.

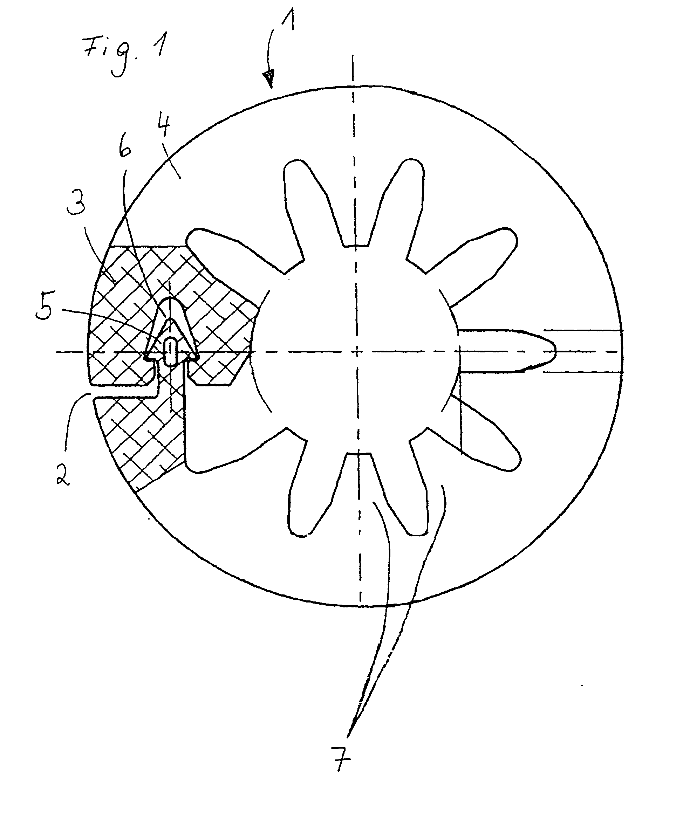

Anhand der Zeichnung ist ein Ausführungsbeispiel des Schlauches näher beschrieben. Darin zeigt
- Fig. 1: einen Querschnitt durch den erfindungsgemäßen Schlauch.

Der in Fig. 1 dargestellte erfindungsgemäße Schlauch 1 weist auf seiner Innenseite Rippen 7 auf. Diese Rippen 7 dienen zum Einen dem Abfangen von Stößen und dem besseren Einspannen einer durch den Schlauch 1 hindurch geführten Leitung. Der Schlauch 1 weist entlang seiner Längsrichtung einen Schlitz 2 auf. In den Bereichen beidseits des Schlitzes 2 ist der Schlauch 1 aus einem härteren Elastomer 3 gefertigt als der übrige Schlauch 1. In der Oberseite des Schlitzes 2 ist eine Ausnehmung 6 vorgesehen, deren Rand hinterschnitten ist. Auf der Unterseite des Schlitzes 2 ist ein zu der Ausnehmung 6 komplementärer Widerhaken 5 vorgesehen. In der geschlossenen Stellung wird dieser Widerhaken 5 in die Ausnehmung 6 eingedrückt. Zum Öffnen muss die Ausnehmung 6 aufgebogen werden, so dass der Widerhaken 5 herausgezogen werden kann. Dann kann der Schlauch 1 geöffnet und von der Leitung abgenommen werden.

Durch die erfindungsgemäße Ausgestaltung des Schlauches 1 ist es möglich, diesen an beliebigen Stellen auf eine Leitung aufzusetzen. Dazu muss der Schlauch 1 nicht entlang der Leitung verschoben werden.

### Bezugszeichenliste

- 1: Schlauch
- 2: Schlitz
- 3: hartes Elastomer
- 4: weiches Elastomer
- 5: Widerhaken
- 6: Ausnehmung
- 7: Rippen

## Patentansprüche

1. Schlauch aus Gummi oder Kunststoff, wobei der Schlauch auf der inneren Wandung Rippen oder Noppen aufweist, wobei der Schlauch (1) in Längsrichtung einen Schlitz (2) aufweist,
**dadurch gekennzeichnet,**
**dass** der Schlauch (1) aus einem Verbundwerkstoff aus zumindest zwei Elastomeren (3,4) besteht, wobei der Schlauch (1) in den Bereichen beiderseits des Schlitzes (2) aus einem härteren Elastomer (3) als das übrige Elastomer (4) des Schlauches (1) besteht und dass in diesen Bereichen auf jeweils gegenüberliegenden Seiten des Schlitzes (2) zumindest eine hinterschnittene Ausnehmung (6) und ein dazu komplementärer Widerhaken (5) ausgebildet ist, wobei der Widerhaken (5) innen hohl ist.

2. Schlauch nach Anspruch 1,
**dadurch gekennzeichnet,**
**dass** der Widerhaken (5) und die dazugehörige Ausnehmung (6) über die gesamte Länge des Schlauches (1) ausgebildet ist.

3. Schlauch nach einem der Ansprüche 1 bis 2,
**dadurch gekennzeichnet,**
**dass** der Durchmesser des Schlauches (1) die Länge des Schlauches übersteigt.

## Claims

1. Hose of rubber or of plastic whereas the inner cladding of the hose has ribs or stubs **characterised in that** the hose (1) consists of a compound material of at least two elastomers (3,4), the hose (1) has lengthwise a groove (2), whereas the hose (1) consists on both ends of the groove (2) of a harder elastomer (3) than the remaining elastomer (4) of the hose (1) and in these areas on the respectively opposite sides of the groove (2) at least one undercut opening (6) and its complementary barbed hook (5) are formed, whereas the barbed hook (5) is hollow in the interior.

2. Hose (1) according to claim 1 **characterised in that** the barbed hook (5) and its appendant opening (6) are formed on the entire length of the hose (1).

3. Hose according to any one of claims 1 to 2 **characterised in that** the diameter of the hose (1) exceeds the length of the hose.

## Revendications

1. Tube flexible en caoutchouc ou en matière plastique, le tube flexible présentant des nervures ou des ergots sur sa paroi intérieure, et présentant une fente (2) dans le sens longitudinal,
**caractérisé en ce que**
le tube flexible (1) est constitué d'un matériau composite comportant au moins deux élastomères (3, 4), le tube flexible (1) étant constitué, dans les zones des deux côtés de la fente (2), d'un élastomère (3) plus dur que l'autre élastomère (4) du tube flexible (1), et **en ce que**, dans ces zones, des deux côtés opposés de la fente (2), sont réalisés au moins un évidement (6), muni d'une dépouille à l'arrière, et un contre-crochet (5) complémentaire, le contre-crochet (5) étant creux intérieurement.

2. Tube flexible suivant la revendication 1,
**caractérisé en ce que** le contre-crochet (5) et l'évidement (6) qui lui est complémentaire sont réalisés sur toute la longueur du tube flexible (1).

3. Tube flexible suivant l'une des revendications 1 ou 2, **caractérisé en ce que** le diamètre du tube flexible (1) dépasse la longueur du tube flexible.
